Europäisches Patentamt

European Patent Office

Office européen des brevets

(19)

(11) Veröffentlichungsnummer : **0 139 264**
**B1**

(12) # EUROPÄISCHE PATENTSCHRIFT

(45) Veröffentlichungstag der Patentschrift :
21.01.87

(51) Int. Cl.⁴ : **A 01 D 41/12**

(21) Anmeldenummer : 84111830.0

(22) Anmeldetag : 03.10.84

(54) Vorrichtung zum Rückdrehen der Einzugsschnecke eines Mähdreschers.

(30) Priorität : 07.10.83 DE 3336603

(43) Veröffentlichungstag der Anmeldung :
02.05.85 Patentblatt 85/18

(45) Bekanntmachung des Hinweises auf die Patenterteilung : 21.01.87 Patentblatt 87/04

(84) Benannte Vertragsstaaten :
BE FR GB SE

(56) Entgegenhaltungen :
DE-A- 2 410 462
GB-A- 2 024 963
US-A- 4 038 880
US-A- 4 133 225

(73) Patentinhaber : Klöckner-Humboldt-Deutz AG Zweigniederlassung Fahr

D-7702 Gottmadingen (DE)

(72) Erfinder : Ahle, Josef

D-8881 Kicklingen 29 (DE)

(74) Vertreter : Patentanwälte Leinweber & Zimmermann
Rosental 7/II Aufg.
D-8000 München 2 (DE)

EP 0 139 264 B1

## Beschreibung

Die Erfindung bezieht sich auf eine Vorrichtung zum Rückdrehen der Einzugsschnecke eines Mähdreschers, um Störungen infolge von Verstopfungen durch verdichtetes Erntegut zu beseitigen, mit einem Mähtisch, dem die Einzugsschnecke zugeordnet ist, sowie einer der Einzugsschnecke vorgelagerten Haspel, deren Tragarme über einen Hubmechanismus auf- und abschwenkbar sind.

Bei einer bekannten Vorrichtung dieser Art (DE-OS-30 14 914) ist der Einzugsschnecke ein gesonderter Drehschubanlasser zugeordnet, dessen Ritzel mit der Verzahnung eines auf der Schneckenwelle sitzenden Zahnrades zusammenwirkt. Da der Drehschubanlasser nur dem Rückdrehen dient, also ein zusätzliches Mähdrescheraggregat bildet, ist diese bekannte Rückdrehvorrichtung außerordentlich aufwendig ; außerdem erhöht der Anlasser fühlbar das Gesamtgewicht.

Bekannt ist ferner ein Antriebssystem für das Schneidwerk eines Mähdreschers (DD-PS-117 7-94), dem ein auf der Schneidwerkvorgelegwelle angeordnetes Getriebe zugeordnet ist. Dieses besitzt einen verwickelten Aufbau, der in relativ aufwendiger Weise eine Umsteuerung zum Rückdrehen mit niedrigerer Drehzahl ermöglicht.

Einen entsprechend verwickelten und kostspieligen Aufbau weist eine ebenfalls bekannte Antriebsvorrichtung bei Mähdreschern auf (DE-OS-27 45 564), die sich, um ein Rückdrehen zu ermöglichen, eines umsteuerbaren Planetengetriebes bedient.

Der Erfindung liegt die Aufgabe zugrunde, die Vorrichtung der eingangs genannten Gattung so weiter auszugestalten, daß sich eine baulich besonders einfache und leicht zu bedienende Ausführung ergibt.

Diese Aufgabe wird erfindungsgemäß im wesentlichen dadurch gelöst, daß die Einzugsschnecke mit einem um die Schneckenachse drehbar gelagerten Treibhebel kuppelbar ist, der mit mindestens einem der Tragarme der Haspel verbunden und bei dessen Verschwenkung seinerseits unter Mitnahme der mit ihm gekuppelten Einzugsschnecke verschwenkbar ist.

Die Erfindung basiert somit auf der Erkenntnis, daß es keines gesonderten Antriebsmotors bzw. eines verwickelten Umsteuergetriebes bedarf, wenn man die erforderliche Energie für die Rückdrehung von dem sowieso vorhandenen Haspel-Hubmechanismus ableitet.

Eine baulich besonders einfache Ausführung ist dadurch gegeben, daß die Einzugsschnecke mit einem koaxial angeordneten Klinkenrad verbunden und dem Treibhebel eine zum Rückdrehen der Einzugsschnecke in das Klinkenrad eingreifende Sperrklinke zugeordnet ist.

Dabei hat es sich als im Hinblick auf die Sperrklinkensteuerung besonders vorteilhaft erwiesen, wenn die Sperrklinke mittels eines Elektromagneten entgegen der Wirkung einer Rückstellfeder in Eingriffsstellung in Bezug auf das Klinkenrad überführbar ist.

Eine besonders einfache Verbindung des Treibhebels mit dem Haspel-Hubmechanismus ergibt sich, wenn der Treibhebel über einen Lenker mit dem einen Tragarm der Haspel verbunden ist.

Auf besonders einfache Weise läßt sich die Rückdrehung der Schneckenwelle ausschließlich in stillgesetztem Mähdrescherzustand erzielen, wenn im Stromkreis des vom Fahrersitz des Mähdreschers aus betätigbaren Elektromagneten ein erst in ausgeschaltetem Zustand des normalen Vorwärtsantriebs der Einzugsschnecke geschlossener Sicherheitsschalter liegt.

Weitere Einzelheiten ergeben sich aus der folgenden Beschreibung und der Zeichnung, auf die bezüglich der Offenbarung aller nicht im Text beschriebenen Einzelheiten ausdrücklich verwiesen wird. Es zeigen :

Figur 1 eine schematische Seitenansicht des vorderen Teils eines Mähdreschers mit der erfindungsgemäßen Vorrichtung,

Figur 2 einen Schnitt durch das eine Ende der Einzugsschnecke entsprechend der Linie II-II der Fig. 3, und

Figur 3 einen Schnitt entsprechend der Linie III-III der Fig. 2.

Wie aus der Zeichnung ersichtlich, umfaßt der Mähdrescher 1 eine motorgetriebene Riemenscheibe 2, von der aus über einen Treibriemen 3 ein Dreschtrommel-Antriebsrad 4 antreibbar ist. Koaxial zu letzterem und mit diesem verbunden ist eine Riemenscheibe 5 kleineren Durchmessers, von der aus über Treibriemen bzw. -ketten 6 einerseits die Einzugsschnecke 7 und andererseits die Haspel 8 des Mähdreschers 1 antreibbar sind. Die Einzugsschnecke 7 ist in bekannter Weise dem Mähtisch 9 mit dem Mähwerk 10 zugeordnet. Die der Einzugsschnecke 7 vorgelagerte Haspel 8 sitzt an Tragarmen 11, die mit ihrem einen Ende um eine Achse 12 schwenkbar sind, und zwar mittels eines durch eine druckmittelbeaufschlagbare Kolben-Zylinder-Einheit 13 gebildeten Hubmechanismus. Das eine Ende der Kolben-Zylinder-Einheit 13 ist an einer Seitenwand 14 des Mähtisches 9 und das andere Ende an dem Tragarm 11 angelenkt.

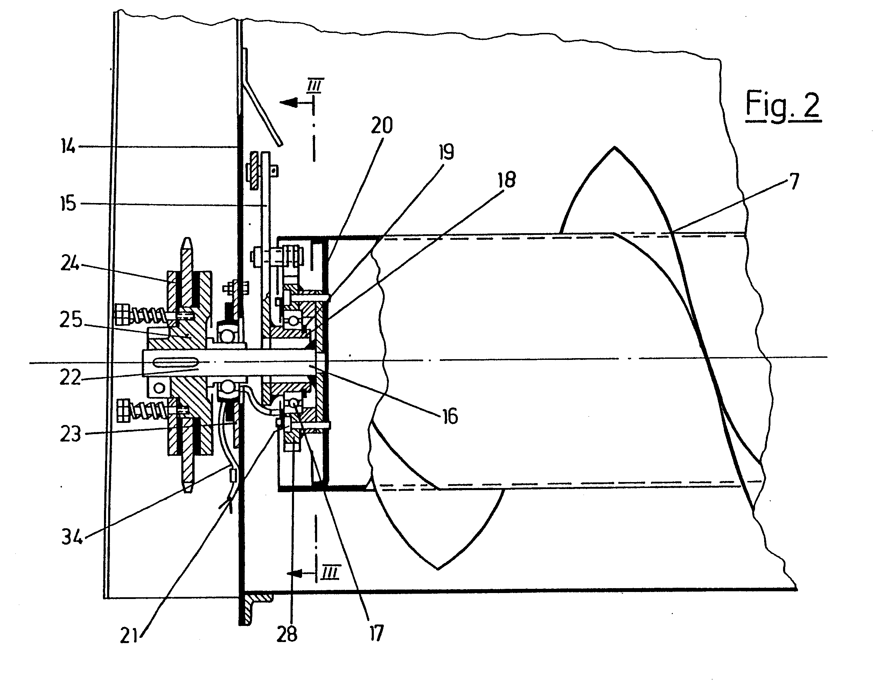

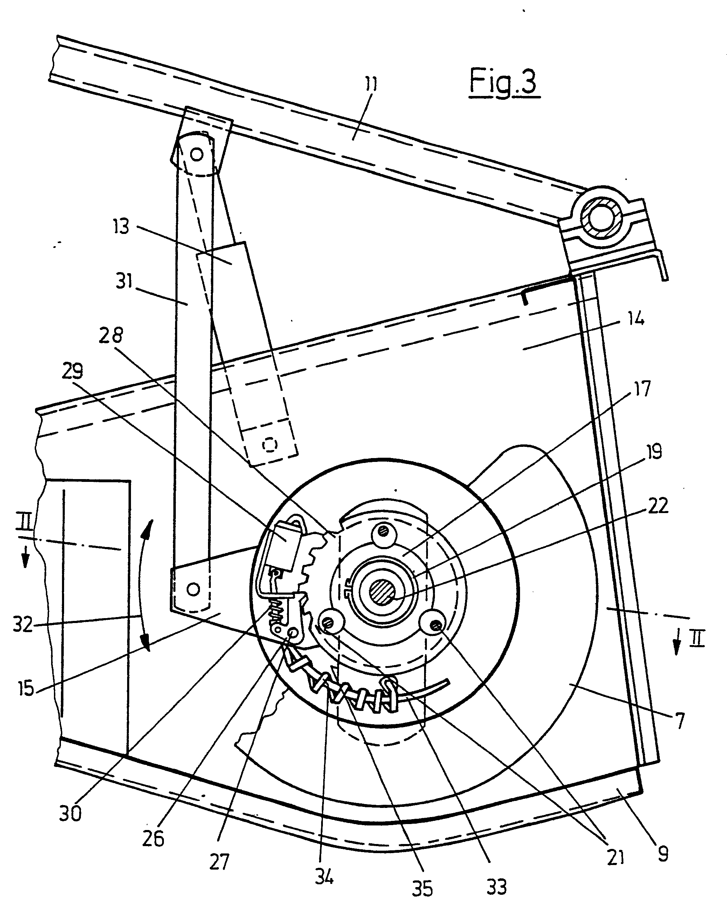

Wie aus Fig. 2 und 3 ersichtlich, ist koaxial zur Einzugsschnecke 7 ein Treibhebel 15 um die Schneckenachse 16 drehbar gelagert, und zwar unter Zwischenschaltung eines Kugellagers 17. Dieses ist einerseits auf einer dem Treibhebel 15 zugeordneten zylindrischen Nabe 18 durch einen Sprengring 19 festgelegt. Die Einzugsschnecke 7 weist stirnseitig eine Wand 20 auf, an der das Kugellager 17 andererseits durch drei Exzenterscheibenbolzen 21 festgelegt ist. Mit der Wand 20 der Einzugsschnecke 7 ist ein Wellenansatz 22 verschweißt, dem ein an der Seitenwand 14 des Mähtisches 9 festgelegtes Lager 23 zugeordnet ist. Für den Antrieb der Einzugsschnecke 7 ist ein eine bei höheren Belastungen wirksam werdende bekannte Rutschkupplung 24 umfassendes Antriebsrad 25 vorgesehen.

Wie insbesondere aus Fig. 3 hervorgeht, ist auf den Treibhebel 15 eine Sperrklinke 26 um eine Achse 27 schwenkbar gelagert. Dieser Sperrklinke 26 ist ein koaxial zur Einzugsschnecke 7 angeordnetes und mit letzterer, wie aus Fig. 2 ersichtlich, verschraubtes Klinkenrad 28 zugeordnet. Am Treibhebel 15 ist ferner ein Elektromagnet 29 gelagert, dessen Anker mit der Sperrklinke 26 verbunden ist.

In der in Fig. 3 veranschaulichten Stellung der Sperrklinke 26 greift sie an einem Zahn des Klinkenrades 28 an. In diese Stellung gelangt die Sperrklinke 26 bei Betätigung des Elektromagneten 29 entgegen der Wirkung einer an ihr angreifenden Rückstellfeder 30. Der Treibhebel 15 ist ferner über einen Lenker 31 mit dem einen Tragarm 11 der Haspel 8 verbunden. Bei Beaufschlagung der Kolben-Zylinder-Einheit 13 und Verschwenkung des Tragarms 11 wird der Treibhebel 15 vom Lenker 31 mitgeführt und im Sinne des Pfeils 32 verschwenkt. Bei Betätigung des Elektromagneten 29 gelangt die auf dem Treibhebel 15 gelagerte Sperrklinke 26 in die veranschaulichte Eingriffsstellung und nimmt das Klinkenrad 28 und damit die Einzugsschnecke 7 in Rückdrehrichtung mit. Wird der Elektromagnet 29 ausgeschaltet, so führt die Rückstellfeder 30 die Sperrklinke 26 wieder in die unwirksame Ausgangslage zurück.

Um die Stromversorgung des Elektromagneten 29 in jeder Lage des ihn trägenden Treibhebels 15 sicherzustellen, ist dem Treibhebel 15 eine bogenförmige Tragstange 33 zugeordnet, um die das Anschlußkabel 34 schraubenwendelförmig herumgelegt ist. Das Anschlußkabel 34 paßt sich so den Treibhebelbewegungen an, ehe es, wie Fig. 3 zeigt, durch eine längliche Öffnung 35 der Seitenwand 14 hindurchgeführt ist, die in bekannter Weise eine Höhenverstellung der Einzugsschnecke 7 in Bezug auf den Mähtisch 9 zuläßt.

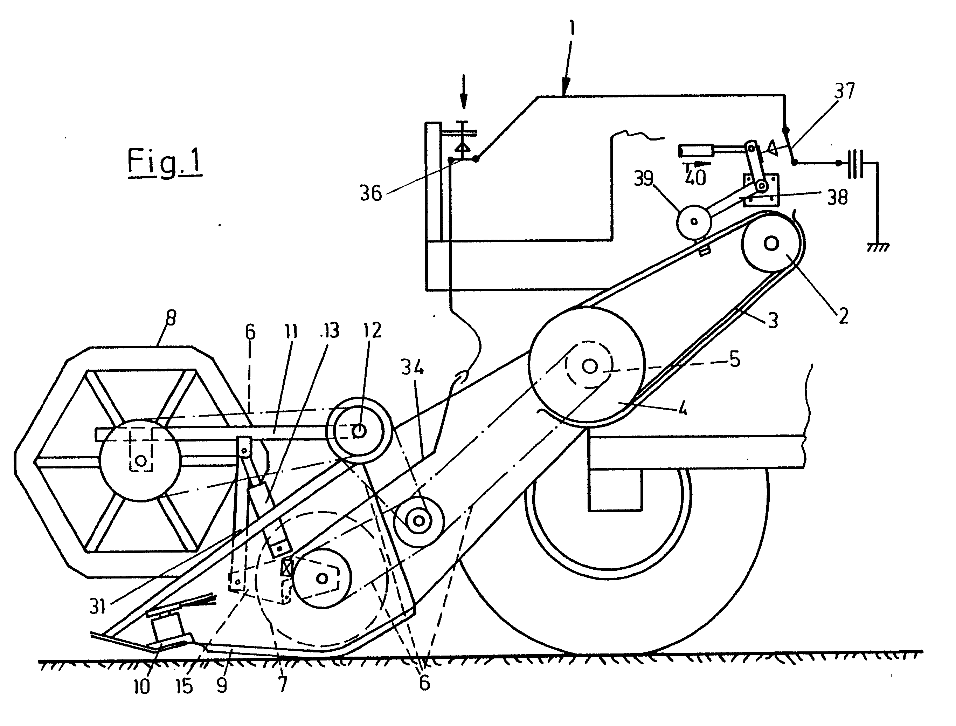

Aus Fig. 1 geht hervor, daß das Anschlußkabel 34 des Elektromagneten 29 einen Teil des Stromkreises bildet, über den der Elektromagnet vom Fahrersitz des Mähdreschers aus durch Betätigung eines Schalters 36 einschaltbar ist. In diesem Stromkreis liegt ferner ein Sicherheitsschalter 37, durch den gewährleistet ist, daß sich der Elektromagnet 29 erst in ausgeschaltetem Zustand des normalen Vorwärtsantriebs der Einzugsschnecke 7 betätigen läßt. Wie aus Fig. 1 entnehmbar, ist dem Treibriemen 3 nämlich eine an einem Winkelhebel 38 gelagerte Spannrolle 39 zugeordnet, die bei Beaufschlagung des Treibriemens 3 für eine Mitnahme des Dreschtrommel-Antriebsrades 4 von der Riemenscbeibe 2 aus sorgt. Wird der Winkelhebel 38 jedoch in Richtung des Pfeiles 40 beaufschlagt, dann hebt die Spannrolle 39 vom Treibriemen 3 ab, und die Antriebsverbindung von der Riemenscheibe 2 zum Dreschtrommel-Antriebsrad 4 wird unterbrochen. Gleichzeitig wird durch den Winkelhebel 38 der Sicherheitsschalter 37 in geschlossenen Zustand überführt, und der Elektromagnet läßt sich nunmehr über den Schalter 36 betätigen.

Bezugszeichenaufstellung

1 Mähdrescher
2 Riemenscheibe
3 Treibriemen
4 Dreschtrommel-Antriebsrad
5 Riemenscheibe
6 Treibriemen
7 Einzugsschnecke
8 Haspel
9 Mähtisch
10 Mähwerk
11 Tragarm
12 Achse
13 Hubmechanismus ; Kolben-Zylinder-Einheit
14 Seitenwand
15 Treibhebel
16 Scheckenachse
17 Kugellager
18 Nabe
19 Sprengring
20 Wand
21 Exzenterscheibenbolzen
22 Wellenansatz
23 Lager
24 Rutschkupplung
25 Antriebsrad
26 Sperrklinke
27 Achse
28 Klinkenrad
29 Elektromagnet
30 Rückstellfeder
31 Lenker
32 Pfeil
33 Tragstange
34 Anschlußkabel
35 längliche Öffnung
36 Schalter
37 Sicherheitsschalter
38 Winkelhebel
39 Spannrolle
40 Pfeil

**Patentansprüche**

1. Vorrichtung zum Rückdrehen der Einzugsschnecke (7) eines Mähdreschers (1), um Störungen infolge von Verstopfungen durch verdichtetes Erntegut zu beseitigen, mit einem Mähtisch (9), dem die Einzugsschnecke (7) zugeordnet ist, sowie einer der Einzugsschnecke vorgelagerten Haspel (8), deren Tragarme (11) über einen Hubmechanismus (13) auf- und abschwenkbar sind, dadurch gekennzeichnet, daß die Einzugsschnecke (7) mit einem um die Schneckenachse (16) drehbar gelagerten Treibhebel (15) kuppelbar ist, der mit mindestens einem der Tragarme (11) der Haspel (8) verbunden und bei dessen Verschwenkung seinerseits unter Mitnahme der mit ihm gekuppelten Einzugsschnecke (7) verschwenkbar ist.

2. Vorrichtung nach Anspruch 1, dadurch gekennzeichnet, daß die Einzugsschnecke (7) mit einem koaxial angeordneten Klinkenrad (28) verbunden und dem Treibhebel (15) eine zum Rückdrehen der Einzugsschnecke in das Klinkenrad (28) eingreifende Sperrklinke (26) zugeordnet ist.

3. Vorrichtung nach Anspruch 2, dadurch gekennzeichnet, daß die Sperrklinke (26) mittels eines Elektromagneten (29) entgegen der Wirkung einer Rückstellfeder (30) in Eingriffsstellung in Bezug auf das Klinkenrad (28) überführbar ist.

4. Vorrichtung nach einem der Ansprüche 1 bis 3, dadurch gekennzeichnet, daß der Treibhebel (15) über einen Lenker (31) mit dem einen Tragarm (11) der Haspel (8) verbunden ist.

5. Vorrichtung nach Anspruch 3, dadurch gekennzeichnet, daß im Stromkreis des vom Fahrersitz des Mähdreschers (1) aus betätigbaren Elektromagneten (29) ein erst in ausgeschaltetem Zustand des normalen Vorwärtsantriebs der Einzugsschnecke (7) geschlossener Sicherheitsschalter (36) liegt.

## Claims

1. A device means for reversing the screw conveyor (7) of a combine harvester (1) so as to clear blockages caused by an excess of compressed crop material, comprising a mower plate (9) cooperating with said screw conveyor (7), as well as a reel (8) arranged upstream of said screw conveyor, the support arms (11) of said sheave adapted to be pivoted up and down by an elevating mechanism (13), characterized in that said screw conveyor (7) can be coupled with a driving lever (15) which is rotatively supported by the axis (16) of said screw and is connected with at least one of said support arms (11) of said sheave (8) and, when said support arm is pivoted, can be pivoted on its part in taking along said screw conveyor (7) it is coupled with.

2. A device according to claim 1, characterized in that said screw conveyor (7) is connected with a coaxial ratchet wheel (28), and in that said driving lever (15) cooperates with a ratchet device (26) engaging said ratchet wheel (28) for reversing said screw conveyor.

3. A device according to claim 2, characterized in that said ratchet device (26) is adapted to be transferred into engagement position relative to said ratchet wheel (28) by means of an electromagnet (29) against the action of a reset spring (30).

4. A device according to one of claims 1 to 3, characterized in that said driving lever (15) is connected with said one support arm (11) of said sheave (8) *via* a steering lever (31).

5. A device according to claim 3, characterized in that the circuit of said electromagnet (29) which is operable from the driver-seat of the combine harvester (1) includes a safety switch (36) which is only closed in the disconnected state of the normal forward drive of said screw conveyor (7).

## Revendications

1. Dispositif pour inverser le sens de rotation de la vis d'alimentation (7) d'une moissonneuse-batteuse (1) pour remédier aux perturbations dues à des engorgements de la récolte tassée, avec une table de fauchage (9), à laquelle est affectée la vis d'alimentation (7), ainsi qu'un rabatteur (8) précédant la vis d'alimentation, dont les bras de support (11) peuvent être pivotés vers le haut et vers le bas par un mécanisme de levée (13), caractérisé en ce que la vis d'alimentation (7) peut être couplée à un levier d'entraînement (15) logé rotatif autour de l'axe (16) de la vis, lequel est relié au moins à l'un des bras de support (11) du rabatteur (8) et qui, lors de son pivotement, peut être pivoté, pour sa part, en entraînant la vis d'alimentation 7 qui lui est couplée.

2. Dispositif selon la revendication 1, caractérisé en ce que la vis d'alimentation (7) est reliée à une roue à cliquet (28) coaxiale et au levier d'entraînement (15) est adjoint un cliquet d'arrêt (26) venant en engagement avec la roue à cliquet (28) pour inverser le sens de rotation de la vis d'alimentation.

3. Dispositif selon la revendication 2, caractérisé en ce que le cliquet d'arrêt (26) peut passer en position d'engagement relativement à la roue à cliquet (28) au moyen d'un électro-aimant (29) contre l'effet d'un ressort de retour (30).

4. Dispositif selon l'une quelconque des revendications 1 à 3, caractérisé en ce que le levier d'entraînement (15) est relié par une bielle (31) à l'un des bras de support (11) du rabatteur (8).

5. Dispositif selon la revendication 3, caractérisé en ce que dans le circuit de l'électro-aimant (29) pouvant être actionné du siège du conducteur de la moissonneuse-batteuse (1), se trouve un commutateur de sécurité (36) qui n'est fermé qu'à l'état hors circuit de la commande normale d'avance de la vis d'alimentation (7).

Fig.1

0 139 264

Fig. 2

Fig.3